# EUROPÄISCHE PATENTSCHRIFT

(11) **EP 0 723 835 B1**
(45) Veröffentlichungstag und Bekanntmachung des Hinweises auf die Patenterteilung: **09.05.2001**
(21) Anmeldenummer: 96100617.8
(22) Anmeldetag: 17.01.1996
(51) Int. Cl.: B23K 35/363

(54) **Flussmittel**
Flux
Flux

(30) Priorität: 24.01.1995 DE 19501937; 01.06.1995 DE 19519515
(43) Veröffentlichungstag der Anmeldung: 31.07.1996
(73) Patentinhaber: Solvay Fluor und Derivate GmbH, 30173 Hannover (DE)
(72) Erfinder: Belt, Heinz-Joachim, D-30938 Burgwedel (DE); Borinski, Alfred, D-31319 Sehnde (DE); Sander, Rüdiger, D-31319 Sehnde (DE); Rudolph, Werner, D-30559 Hannover (DE)
(74) Vertreter: Lauer, Dieter, Dr.

(56) Entgegenhaltungen:
- EP-A- 0 140 267
- US-A- 4 579 605
- US-A- 5 232 788
- PATENT ABSTRACTS OF JAPAN vol. 009, no. 245 (M-418), 2.Oktober 1985 & JP-A-60 099477 (TOYODA CHUO KENKYUSHO KK), 3.Juni 1985,
- PATENT ABSTRACTS OF JAPAN vol. 010, no. 242 (M-509), 21.August 1986 & JP-A-61 074769 (FURUKAWA ALUM CO LTD;OTHERS: 01), 17.April 1986,
- PATENT ABSTRACTS OF JAPAN vol. 017, no. 607 (M-1507), 9.November 1993 & JP-A-05 185286 (FURUKAWA ALUM CO LTD), 27.Juli 1993,

## Beschreibung

Die Erfindung bezieht sich auf ein Verfahren zum Hartlöten von metallischen Werkstoffen, eine wäßrige Flußmittelsuspension und ein neues Flußmittel zur Anwendung in einem Hartlötverfahren sowie ein Herstellungsverfahren für das neuartige Flußmittel.

Beim Hartlöten werden Metallwerkstoffe bei einer Temperatur oberhalb von 500 °C mit Hilfe eines geschmolzenen Zusatzmetalls (Lot) verbunden. Die Schmelztemperatur des Lotes ist niedriger als die Schmelztemperatur der Werkstoffe, so daß die Lotverbindungen vieler Metalle durch erneutes Schmelzen des Lotes zerstörungsfrei getrennt werden können.

Beim Löten stellen Oxide und andere störende Deckschichten auf der Metalloberfläche ein Problem dar: Die Oberfläche muß metallisch rein sein, damit eine einwandfreie Lötverbindung zustande kommt. Hierzu verwendet man Flußmittel, die meist aufgepinselt, aufgesprüht oder als Lotummantelung auf den Werkstoff aufgetragen wird.

Flußmittel auf Basis von Alkalisalzen, vorzugsweise Kaliumsalzen, komplexer Aluminiumfluoride sind besonders gut geeignet, z. B. für das Hartlöten von Leichtmetallwerkstoffen, insbesondere von legierten (beispielsweise mit Magnesium) oder unlegierten Aluminiumwerkstoffen, da sie nicht korrosiv und nicht hygroskopisch sind. Es sind derartige Flußmittel bereits bekannt, die z. B. Gemische von KAlF₄ und K₃AlF₆ oder Gemische von KAlF₄ und K₂AlF₅ sind, wobei die letztere genannte Verbindung gegebenenfalls als Hydrat vorliegen kann.

Die oberflächenreinigende Wirkung eines Flußmittels zeigt sich u. a. darin, daß das Lot nach dem Schmelzen auf der Oberfläche des Bauteils bzw. der Bauteile zerfließt. Je besser die Oberfläche des Bauteils durch das Flußmittel gereinigt ist, desto leichter zerfließt das Lot auf ihr.

Aufgabe der vorliegenden Erfindung war es, ein Flußmittel zur Verfügung zu stellen, welches das Fließverhalten des Lots auf der Oberfläche von Metallwerkstoffen, insbesondere auf Basis von Leichtmetallwerkstoffen wie Aluminium, verbessert. Aufgabe war weiterhin, eine entsprechende wäßrige Suspension des Flußmittels, ein neuartiges Flußmittel und ein Verfahren zur Herstellung des Flußmittels anzugeben. Diese Aufgaben werden durch die vorliegende Erfindung gelöst.

Das erfindungsgemäße Verfahren zum Hartlöten von metallischen Werkstoffen, insbesondere Leichtmetallwerkstoffen, unter Verwendung eines Flußmittels auf Basis von Alkalisalzen, vorzugsweise Kaliumsalzen, komplexer Fluoride des Aluminiums ist dadurch gekennzeichnet, daß man ein Flußmittel einsetzt, welches irreversibel dehydratisiertes K₂AlF₅ enthält.

Im folgenden wird der Begriff "irreversibel dehydratisiertes K₂AlF₅" erläutert.

Das thermische Verhalten von hydratisiertem K₂AlF₅ (K₂AlF₅ • H₂O) ist schon mehrfach das Ziel wissenschaftlicher Untersuchungen gewesen. Bukovec und Bukovec, Thermochimica Acta 92 (1985), Seiten 689 bis 692, haben die Entwässerung des Hydrats bei Temperaturen bis ca. 200 °C untersucht. Tananaev und Nekhamkina, Izvest. Sektora Fiz.-Khim. Anal. Akad. Nauk S.S.S.R. 20 (1950), Seiten 227 bis 237 (Chemical Abstracts Vol. 48, 1954, Referat 8012a) haben beobachtet, daß das Hydrat im Thermogramm bei 145 bis 165 °C einen endothermen Effekt zeigt, der auf die Entwässerung zurückgeführt wird, und bei 230 bis 260 °C einen exothermen Effekt, der auf die Rekristallisation des wasserfreien Salzes zurückgeführt wird. Wallis und Bentrup haben in Z. Anorg. und Allg. Chem. 589 (1990), Seiten 221 bis 227, eine röntgenographische und thermoanalytische Untersuchung der thermischen Entwässerung von K₂AlF₅ • H₂O veröffentlicht. Dabei wurde festgestellt, daß das Hydrat bei einer Temperatur im Bereich von 90 bis 265 °C reversibel zu tetragonal kristallisierendem K₂AlF₅ umgewandelt wird. Bei 265 (± 10) °C bildet sich irreversibel das orthorhombisch kristallisierende K₂AlF₅ (in der Veröffentlichung als "Phase II" bezeichnet). Unter quasi-isobaren Bedingungen lag bereits bei 228 °C das irreversibel dehydratisierte Produkt Phase II vor. Ein solches orthorhombisch kristallisiertes K₂AlF₅ wird im Rahmen der vorliegenden Erfindung als "irreversibel dehydratisiertes K₂AlF₅" bezeichnet.

Die Ergebnisse der wissenschaftlichen Untersuchungen haben allerdings keinerlei Eingang in die Technik der Flußmittelherstellung gefunden. Willenberg, US-A 4,428,920, offenbart die Herstellung eines Flußmittels durch Vereinigung von Fluoroaluminiumsäure und einer (unterstöchiometrisch eingesetzten) Kaliumverbindung, z. B. KOH (bzw. Kalilauge). Die Schmelzpunkte wurden an Produkten ermittelt, die bei 120 °C getrocknet worden waren. Kawase, US-A 4,579,605, offenbart ein Flußmittel zum Aluminiumlöten, welches aus KAlF₄ und K₂AlF₅ • H₂O oder K₂AlF₅ besteht. Die Herstellung dieses Flußmittels erfolgt beispielsweise durch Auflösen von Aluminiumhydroxid in Flußsäure und Zugabe von Kaliumverbindungen. Eine Trocknungstemperatur von 100 °C wird als ausreichend angegeben. Meshri, US-A 5,318,764, offenbart verschiedene Methoden zur Herstellung eines Flußmittels auf Basis von Kaliumsalzen komplexer Fluoride des Aluminiums; beispielsweise durch Vereinigen von Aluminiumoxid-Trihydrat mit KF oder KHF₂ und HF, von Aluminiumfluorid-Trihydrat und KF oder KHF₂, oder auch durch Vereinigen von Aluminiumoxid-Trihydrat und Kalilauge und anschließender Zugabe von HF. Gemäß den Beispielen wird bei 150 °C getrocknet.

Der Vorteil der Verwendung von Flußmitteln, die erfindungsgemäß irreversibel dehydratisiertes K₂AlF₅ enthalten, ist, daß das Lot ein sehr viel besseres Fließverhalten zeigt als bei Verwendung von Flußmitteln ohne die genannte Komponente.

Das Lötverfahren wird in bekannter Weise durchgeführt. Das Flußmittel wird zweckmäßig in Form einer wäßrigen Suspension, die ebenfalls Gegenstand der vorliegenden Erfindung ist, auf einen oder mehrere der zu verbindenden Metallwerkstoffe aufgebracht. Vorteilhaft enthält die Suspension 3 bis 60 Gew.-% des Flußmittels; Rest auf 100 Gew.-% sind Wasser und etwaige Verunreinigungen. Die Suspension der Erfindung bildet nach dem Auftragen auf das oder die Werkstoffe bzw. Bauteile eine besonders lockere Schicht, die im Aussehen dem Schnee ähnelt. Solch eine lockere flockige den gewünschten Bereich des Werkstoffes lückenlos bedeckende Schicht ist anwendungstechnisch sehr vorteilhaft. Die Metallwerkstoffe werden dann erhitzt, z. B. in einem Ofen oder mittels Brenner, wobei zunächst das Flußmittel und dann das Lot schmilzt und sich eine Lötverbindung ausbildet. Dabei kann man gewünschtenfalls in Inertgasatmosphäre, z. B. in Stickstoffatmosphäre, löten. Man kann das Lötverfahren aber auch in Luftatmosphäre durchführen.

Das erfindungsgemäße Lötverfahren kann modifiziert werden. Beispielsweise kann man gemäß der Lehre der WO 92/12821 dem Flußmittel ein Metall beimischen, welches vorteilhaft feinpulverig vorliegt (beispielsweise in Form von Partikeln einer Größe unterhalb von 1.000 µm, vorzugsweise im Bereich von 4 bis 80 µm), welches mit einer oder beiden zu lötenden Metalloberflächen ein lötbares Eutektikum bildet. Besonders geeignet ist Silicium, gut geeignet sind auch Kupfer und Germanium. So kann man ein Flußmittel einsetzen, welches je 100 Gew.-Teile der komplexen Aluminiumfluoride 10 bis 500 Gew.-Teile an feinpulverigem Metall enthält. Zusätzlich kann man auch noch weitere Metalle feinpulverig beimischen, welche die Oberflächeneingenschaften der gelöteten Teile bzw. des sich bildenden Eutektikums modifizieren. So kann man feinpulveriges Eisen, Mangan, Nickel, Zink, Wismut, Strontium, Chrom, Antimon oder Vanadium wie in der genannten internationalen Patentanmeldung beschrieben, beimischen. Es ist auch möglich, gemäß der Lehre der WO 93/15868 auf die zu verbindenden Metallteile eine metallische Beschichtung aufzubringen, in die das Flußmittel dann eingebettet wird. Sehr gut geeignet sind beispielsweise Zink-Schichten oder Schichten aus Zink-Aluminium-Legierung.

Ein weiterer Gegenstand der Erfindung ist ein Flußmittel, welches irreversibel dehydratisiertes K₂AlF₅ enthält. Da aus der Veröffentlichung von Wallis und Bentrup das reine, irreversibel dehydratisierte K₂AlF₅ mit orthorhombischer Kristallform bereits bekannt ist, ist ein Flußmittel, das aus diesem reinen orthorhombisch kristallisierten K₂AlF₅ besteht, vom Umfang der Erfindung ausgenommen, sofern es nicht in Form von spröden, unregelmäßigen Kristallen vorliegt. Die Herstellung eines solchen Produktes mit unregelmäßigen Kristallen wird später noch beschrieben (schlagartige Verdampfung des Wassers bei entsprechend hoher Temperatur).

Ein bevorzugtes Flußmittel enthält somit irreversibel dehydratisiertes K₂AlF₅ in Form unregelmäßiger, spröder Kristalle, oder es besteht daraus.

Das Flußmittel enthält vorteilhaft 1 bis 97 Gew.-% KAlF₄, 1 bis 20 Gew.-% irreversibel dehydratisiertes K₂AlF₅, 0 bis 15 Gew.-% reversibel dehydratisiertes K₂AlF₅, 0 bis 15 Gew.-% K₂AlF₅ • H₂O und 0 bis 10 Gew.-% K₃AlF₆. Insbesondere bevorzugt ist ein Flußmittel, welches 86 bis 97 Gew.-% KAlF₄, 3 bis 14 Gew.-% irreversibel dehydratisiertes K₂AlF₅ und 0 bis 8 Gew.-% rehydratisierbares K₂AlF₅, 0 bis 8 Gew.-% K₂AlF₅ • H₂O und 0 bis 4 Gew.-% K₃AlF₆ enthält oder aus den genannten Komponenten besteht. Außerdem kann noch nicht chemisch gebundenes Wasser enthalten sein, z. B. 0 bis zu 7 Gew.-%.

Eine bevorzugte Variante des Flußmittels umfaßt je 100 Gewichtsteile der Verbindungen von komplexen Aluminiumfluoriden, zusätzlich 10 bis 500 Gewichtsteile eines feinpulverigen Metalls beigemischt, welches mit einer oder beiden der Metalloberflächen beim Löten ein Eutektikum bildet. Das Flußmittel kann zusätzlich auch noch eines oder mehrere der weiter oben genannten Metalle umfassen, welche die Oberflächeneigenschaften der zu verbindenden Metallteile modifizieren.

Neben der schon erwähnten vorteilhaften Wirkung auf die Fließfähigkeit des Lots weist das Flußmittel hohe Lagerstabilität auf. Außerdem bilden sich stabile Suspensionen bei der Suspendierung in Wasser. Dies ist für die Anwendung vorteilhaft, wie die oben erwähnte flockige Struktur auf den Werkstücken.

Ein besonderer Aspekt der vorliegenden Erfindung betrifft die Herstellung des erfindungsgemäßen Flußmittels. Dazu erzeugt man entweder eine Mischung der Bestandteile, wobei man irreversibel dehydratisiertes K₂AlF₅ mit den anderen Bestandteilen vermischt oder einem bereits an sich anwendungsfertigen Flußmittel beifügt. Alternativ kann man auch das entsprechende reversibel dehydratisierte Produkt und/oder die Hydrat-Verbindung beimischen und dann einer Temperaturbehandlung unterziehen, oder man unterwirft Material, welches die genannten Vorprodukte enthält, einer Temperaturbehandlung.

Gemäß einer Ausführungsform kann man somit zunächst die Hydrat-Verbindung oder reversibel dehydratisiertes K₂AlF₅ herstellen, z. B. wie bei Wallis und Bentrup beschrieben durch Fällung aus K- und Al-haltiger HF-Lösung mit Ethanol und anschließender Trocknung. Das erhaltene Vorprodukt wird dann während einer ausreichenden Zeitdauer auf eine erhöhte Temperatur gebracht, so daß sich mindestens ein Teil des Vorprodukts in das irreversibel dehydratisierte Produkt umwandelt. Das fertige Pentafluoraluminat kann dann als solches eingesetzt werden oder man kann es anderen an sich anwendungsfertigen Flußmittel zusetzen oder auch mit anderen Alkalimetallsalzen, vorzugsweise Kaliumsalzen, von anderen komplexen Fluoriden des Aluminiums vermischen. So kann man beispielsweise Gemische des irreversibel dehydratisierten Produkts mit KALF₄, K₂AlF₅ • H₂O, reversibel dehydratisiertem Pentafluoraluminat und/oder K₃AlF₆ erzeugen. Diese Gemische stellen dann ein erfindungsgemäßes Flußmittel dar.

Gemäß einer anderen Ausführungsform setzt man K₂AlF₅ • H₂O und/oder reversibel dehydratisiertes K₂AlF₅ Vorprodukten von Flußmitteln, z. B. den filterfeuchten Kuchen, die bei der Herstellung anfallen, oder an sich anwendungsfertigen Flußmitteln zu. Die so hergestellten Gemische werden dann eine ausreichende Zeitdauer auf eine erhöhte Temperatur gebracht, so daß sich die Hydrat-Verbindung oder das reversibel dehydratisierte Produkt mindestens teilweise zum irreversibel dehydratisiertem Produkt umwandeln. Es liegen dann erfindungsgemäße Flußmittel vor.

Eine weitere Ausführungsform sieht vor, daß man Flußmittel, die an sich anwendungsfertig sind und reversibel dehydratisiertes Pentafluoraluminat oder die Hydrat-Verbindung enthalten, durch Temperaturbehandlung unter Bildung von irreversibel dehydratisiertem K₂AlF₅ in ein erfindungsgemäßes, verbessertes Produkt umwandelt.

Eine weitere Ausführungsform des Herstellungsverfahrens sieht vor, daß man die Temperaturbehandlung in eines der Herstellungsverfahren für Flußmittel auf Basis von Alkalisalzen von komplexen Aluminiumfluoriden integriert. Man fällt das Flußmittel aus wäßriger Lösung, welche Alkaliionen, vorzugsweise Kaliumionen, Aluminium- und Fluoridionen enthält, trocknet gewünschtenfalls und führt dann eine Temperaturbehandlung durch. Beispielsweise kann man das Flußmittel wie bei Willenberg, Kawase oder Meshri beschrieben herstellen und einer Temperaturbehandlung unterwerfen, so daß die vorhandene Hydrat-Verbindung bzw. das reversibel dehydratisierte Pentafluoraluminat mindestens teilweise oder auch vollständig in irreversibel dehydratisiertes Produkt umgewandelt wird. Bekanntermaßen, siehe Willenberg, führt man die Fällungsreaktion vorzugsweise zwischen 70 °C und 90 °C durch. Das gefällte Reaktionsprodukt wird zweckmäßig von der überstehenden Flüssigkeit abgetrennt, z. B. in einem Drehfilter oder einer Zentrifuge, und dann der Temperaturbehandlung unterworfen. Dabei hängt die Temperatur und die Zeitdauer der Temperaturbehandlung besonders vom restlichen Wassergehalt (Feuchte und kristallin gebundenes Wasser) und von der Art des Trocknens ab. Führt man die Trocknung beispielsweise batchweise in einem Ofen durch, bringt man das Material auf Temperaturen, bei denen es zur gewünschten irreversiblen Dehydratisierung kommt. Zweckmäßig liegt die Ofentemperatur oberhalb von 265 °C, insbesondere bei oder oberhalb von 300 °C. Heizt man zu stark auf, kann es zur Bildung von Hydrolyse- oder Disproportionierungsprodukten kommen (z. B. von Trikaliumhexafluoraluminat); derartige Produkte können bei manchen Anwendungen stören. Im Hinblick auf die Zeitdauer der Temperaturbehandlung ist klar, daß sie z. B. von der Geometrie des Ofens und von der Art der Befüllung des Ofens mit dem zu trocknenden Produkt abhängt. Man führt die Temperaturbehandlung so lange durch, bis der gewünschte Gehalt an irreversibel dehydratisiertem Produkt enthalten ist. Den Verlauf der Umwandlung kann man durch röntgenographische Analysen überwachen. Dabei ist es beim Trocknen generell vorteilhaft, bei Temperaturen oberhalb von 375 °C zu trocknen, da sich dann, besonders bei schlagartigem Erhitzen, kleine, spröde, unregelmäßig geformte Kristalle bilden, die anwendungstechnisch sehr vorteilhaft sind.

Man kann die Temperaturbehandlung auch in kontinuierlicher Arbeitsweise, beispielsweise in Sprühtrocknern oder Stromtrocknern durchführen. Derartige Trockner weisen den Vorteil auf, daß es zu einer schlagartigen Verdampfung des enthaltenen Wassers kommt und vorteilhaft spröde, unregelmäßige Kristalle des irreversibel dehydratisierten Produkts erhalten werden. Aufgrund der normalerweise sehr kurzen Verweilzeit kann die Umgebungstemperatur im Trockner auch oberhalb von 500 °C liegen. Auch hier kann man den Verlauf der Dehydratisierung durch röntgenographische Untersuchungen ermitteln und den gewünschten Dehydratisierungsgrad einregulieren.

Das erfindungsgemäße Flußmittel und das erfindungsgemäße Anwendungsverfahren können für all jene Zwecke eingesetzt werden, für welche Flußmittel bzw. Lötverfahren mit komplexen Fluoriden des Aluminiums eingesetzt werden. Sehr gut geeignet ist es zum Löten von Aluminium, Kupfer oder deren Legierungen mit anderen Metallen. Die folgenden Beispiele sollen die Erfindung weiter erläutern, ohne sie in ihrem Umfang einzuschränken.

### Beispiel 1:

### Herstellung eines erfindungsgemäßen Flußmittels durch Vermischen

Irreversibel dehydratisiertes K₂AlF₅ wurde wie bei Wallis und Bentrup beschrieben durch Erhitzen der entsprechenden Hydrat-Verbindung auf eine Temperatur von etwa 280 °C hergestellt. Kaliumtetrafluoraluminat und das pulverisierte irreversibel dehydratisierte Produkt wurden im Gewichtsverhältnis von 95:5 miteinander unter Bildung des erfindungsgemäßen Flußmittels vermischt.

### Beispiel 2:

### Herstellung des erfindungsgemäßen Flußmittels aus K-, Al- und F-enthaltender Lösung mit integrierter Temperaturbehandlung

- 2.1.: Herstellung des filterfeuchten Vorproduktes:
Das Vorprodukt wurde gemäß Willenberg, US-A 4,428,920, Beispiel 2 hergestellt. Eingesetzt wurde eine Tetrafluoroaluminiumsäure einer Konzentration von 21 Gew.-% sowie eine Kalilauge mit 10 Gew.-% KOH. Die Kalilauge wurde bei einer Temperatur von 80 °C in die Tetrafluoroaluminiumsäure-Lösung über einen Zeitraum von etwa 1 Stunde unter Rühren zugefügt. Die Menge an Kalilauge wurde so bemessen, daß nach beendeter Zugabe ein Atomverhältnis von Kalium:Aluminium von 0,8:1 im Reaktionsgemisch vorlag. Die Reaktionsmischung wurde dann ohne Wärmezufuhr noch weitergerührt und das ausgefällte Reaktionsprodukt abgefiltert. In einer Zentrifuge wurde der überwiegende Teil des Wassers abgetrennt.
- 2.2.: Temperaturbehandlung des filterfeuchten Vorproduktes
Das gemäß 2.1. hergestellte filterfeuchte Produkt wurde in einem Stromtrockner getrocknet. Die Eingangstemperatur des Trockners lag bei etwa 570 °C, die Verweilzeit betrug etwa eine halbe Sekunde.
Das erhaltene Produkt wurde durch Röntgendiffraktometeraufnahmen untersucht. Es wurde festgestellt, daß neben überwiegend KAlF₄ das irreversibel dehydratisierte K₂AlF₅ enthalten war. Die Verbindung K₂AlF₅ • H₂O war mit einem Anteil von weniger als 7 % im Produkt enthalten. Reversibel dehydratisiertes Pentafluoraluminat konnte nicht nachgewiesen werden. Der gesamte Wassergehalt (Feuchte + kristallin gebundenes Wasser) war kleiner als 2,5 Gew.-%; davon waren weniger als 0,5 Gew.-% kristallin gebunden. Trotz des offensichtlich noch vorhandenen freien Wassers wurde eine Rehydratisierung des irreversibel dehydratisierten Pentafluoraluminats nicht beobachtet. Der Schmelzpunkt lag bei etwa 570 °C, gemäß REM-Untersuchung war die Kristallform spröde und unregelmäßig.

### Beispiel 3:

### Herstellung einer Suspension

Das gemäß Beispiel 2 hergestellte Produkt wurde in Wasser suspendiert, so daß eine 29,7 Gew.-% Flußmittel enthaltende Suspension erzeugt wurde.

### Beispiel 4:

### Anwendung der wäßrigen Suspension des erfindungsgemäßen Flußmittels

Die gemäß Beispiel 3 hergestellte Suspension wurde auf ein Aluminium-Werkstück aufgesprüht. Beim Aufheizen kam es zu einer Verdampfung von Wasser, so daß eine sehr gleichförmige Beschichtung des Werkstückes mit dem Flußmittel resultierte. Ein weiteres Aluminium-Werkstück wurde unter Ausbildung einer Kontaktfläche auf das erste Werkstück gelegt. Nach Zufügen des Lotes und weiterem Erhitzen des Werkstückes auf die Schmelztemperatur des Lotes wurde beobachtet, daß dieses ausgezeichnetes Fließverhalten aufwies mit der Folge einer ausgezeichneten Verlötung der Werkstücke.

### Beispiel 5:

### Herstellung eines Silicium enthaltenden Flußmittels und seine Anwendung

Das gemäß Beispiel 2.2 erzeugte Produkt wurde derart mit Siliciumpulver vermischt, daß pro 2 Gewichtsteile der Fluoraluminate 1 Gewichtsteil Silicium im fertigen Flußmittel enthalten war.

Das Flußmittel wurde auf ein Aluminiumwerkstück aufgebracht wie in Beispiel 4 beschrieben; das Zufügen eines Lotes erübrigt sich. Ein weiteres Werkstück wurde auf das beschichtete erste Werkstück gelegt. Beim Erhitzen verlöteten die beiden Teile miteinander.

## Patentansprüche

1. Verfahren zum Hartlöten von metallischen Werkstoffen, insbesondere Leichtmetallwerkstoffen, unter Verwendung eines Flußmittels auf Basis von Alkalisalzen, vorzugsweise Kaliumsalzen, komplexer Fluoride des Aluminiums, dadurch gekennzeichnet, daß man ein Flußmittel einsetzt, welches irreversibel dehydratisiertes K₂AlF₅ enthält.

2. Verfahren nach Anspruch 1, dadurch gekennzeichnet, daß man ein Flußmittel einsetzt, welches KAlF₄ und irreversibel dehydratisiertes K₂AlF₅ enthält.

3. Verfahren nach Anspruch 1 oder 2, dadurch gekennzeichnet, daß das Flußmittel 1 bis 97 Gew.-% KAlF₄ und 1 bis 20 Gew.-% irreversibel dehydratisiertes K₂AlF₅ enthält, vorzugsweise 86 bis 97 Gew.-% KAlF₄ und 3 bis 14 Gew.-% irreversibel dehydratisiertes K₂AlF₅ enthält.

4. Verfahren nach Anspruch.1, dadurch gekennzeichnet, daß ein Flußmittel verwendet wird, welches pro 100 Gewichtsteile der Alkalisalze komplexer Fluoride des Aluminiums zusätzlich 10 bis 500 Gewichtsteile eines feinpulverigen Lötmetalls, vorzugsweise Silicium, beigemischt enthält.

5. Wäßrige Flußmittelsuspension zur Anwendung im Verfahren gemäß einem der Ansprüche 1 bis 4, dadurch gekennzeichnet, daß sie ein Flußmittel umfaßt, welches irreversibel dehydratisiertes K₂AlF₅ enthält.

6. Flußmittel zum Hartlöten von metallischen Werkstoffen, insbesondere Leichtmetallwerkstoffen, auf Basis von Alkalisalzen, vorzugsweise Kaliumsalzen, komplexer Fluoride des Aluminiums, dadurch gekennzeichnet, daß es irreversibel dehydratisiertes K₂AlF₅ enthält, mit Ausnahme eines Flußmittels, welches aus irreversibel dehydratisiertem K₂AlF₅ besteht.

7. Flußmittel nach Anspruch 6, dadurch gekennzeichnet, daß es 1 bis 97 Gew.-% KAlF₄, 1 bis 20 Gew.-% irreversibel dehydratisiertes K₂AlF₅, 0 bis 15 Gew.-% reversibel dehydratisiertes K₂AlF₅, 0 bis 15 K₂AlF₅ · H₂O und 0 bis 10 Gew.-% K₃AlF₆ enthält.

8. Flußmittel nach Anspruch 7, dadurch gekennzeichnet, daß es aus 86 bis 97 Gew.-% KAlF₄, 3 bis 14 Gew.-% irreversibel dehydratisiertem K₂AlF₅, 0 bis 8 Gew.-% reversibel dehydratisiertem K₂AlF₅, 0 bis 8 Gew.-% K₂AlF₅ · H₂O und 0 bis 4 Gew.-% K₃AlF₆ und 0 bis 7 Gew.-% nicht chemisch gebundenes Wasser besteht.

9. Flußmittel nach einem der Ansprüche 6 bis 8, dadurch gekennzeichnet, daß es pro 100 Gewichtsteile der Alkalisalze komplexer Fluoride des Aluminiums zusätzlich 10 bis 500 Gewichtsteile eines feinpulverigen Lotmetalls, vorzugsweise Silicium, beigemischt enthält.

10. Flußmittel zum Hartlöten von metallischen Werkstoffen, insbesondere Leichtmetallwerkstoffen, auf Basis von Alkalisalzen, vorzugsweise Kaliumsalzen, komplexer Fluoride des Aluminiums, dadurch gekennzeichnet, daß es irreversibel dehydratisiertes K₂AlF₅ in Form unregelmäßiger Kristalle enthält oder daraus besteht.

11. Verfahren zur Herstellung eines Flußmittels gemäß einem der Ansprüche 6 bis 10, dadurch gekennzeichnet, daß man ein Flußmittel, welches reversibel dehydratisiertes K₂AlF₅ und/oder K₂AlF₅ · H₂O enthält, oder eine Vorstufe eines solchen Flußmittels, derart einer Hochtemperaturbehandlung unterwirft, daß mindestens ein Teil der genannten komplexen Aluminiumfluoride in irreversibel dehydratisiertes K₂AlF₅ umgewandelt wird, und man gegebenenfalls ein feinpulveriges Lotmetall, vorzugsweise Silicium, beimischt.

12. Verfahren zur Herstellung eines Flußmittels gemäß einem der Ansprüche 6 bis 10, dadurch gekennzeichnet, daß man irreversibel dehydratisiertes K₂AlF₅ mit anderen Bestandteilen von Flußmitteln auf Basis von Alkalimetallen von komplexen Aluminiumfluoriden wie KAlF₄, K₂AlF₅ · H₂O und/oder reversibel dehydratisiertem K₂AlF₅ vermischt, oder
daß man reversibel dehydratisiertes K₂AlF₅ und/oder K₂AlF₅ · H₂O mit anderen Bestandteilen von Flußmitteln auf Basis von Alkalimetallen von komplexen Aluminiumfluoriden wie KAlF₄ vermischt und derart einer Temperaturbehandlung unterwirft, daß das K₂AlF₅ bzw. K₂AlF₅ · H₂O mindestens teilweise in irreversibel dehydratisiertes K₂AlF₅ umgewandelt wird, oder
daß man das Flußmittel herstellt durch Fällung eines Vorproduktes auf Basis von Alkalisalzen komplexer Fluoride des Aluminiums aus einer wäßrigen Lösung, welche Alkaliionen, vorzugsweise Kaliumionen, Aluminiumionen und Fluoridionen enthält, und Unterwerfen des gegebenenfalls vorgetrockneten Vorprodukts einer Temperaturbehandlung derart, daß enthaltenes K₂AlF₅ · H₂O bzw. reversibel dehydratisiertes K₂AlF₅ mindestens teilweise zu irreversibel dehydratisiertem K₂AlF₅ umgewandelt wird,
und man gegebenenfalls ein feinpulveriges Lotmetall, vorzugsweise Silicium, beimischt.

13. Verfahren nach Anspruch 12, dadurch gekennzeichnet, daß man das Vorprodukt in einer Zentrifuge oder einer Filterkammerpresse entwässert.

14. Verfahren nach einem der Ansprüche 11 bis 13, dadurch gekennzeichnet, daß man die Temperaturbehandlung bei einer Temperatur oberhalb von 228 °C, vorzugsweise oberhalb von 265 °C durchführt.

## Claims

1. Process for brazing metallic materials, in particular light metal materials, using a flux based on alkali metal salts, preferably potassium salts, of complex fluorides of aluminium, characterised in that a flux which contains irreversibly dehydrated K₂AlF₅ is used.

2. Process according to Claim 1, characterised in that a flux which contains KAlF₄ and irreversibly dehydrated K₂AlF₅ is used.

3. Process according to Claim 1 or 2, characterised in that the flux contains 1 to 97% by weight of KAlF₄ and 1 to 20% by weight of irreversibly dehydrated K₂AlF₅, preferably 86 to 97% by weight of KAlF₄ and 3 to 14% by weight of irreversibly dehydrated K₂AlF₅.

4. Process according to Claim 1, characterised in that a flux is used which additionally contains 10 to 500 parts by weight of a finely powdered solder metal, preferably silicon, per 100 parts by weight of the alkali metal salts of complex fluorides of aluminium.

5. Aqueous flux suspension for use in the process according to any of Claims 1 to 4, characterised in that it comprises a flux which contains irreversibly dehydrated K₂AlF₅.

6. Flux for brazing metallic materials, in particular light metal materials, based on alkali metal salts, preferably potassium salts, of complex fluorides of aluminium, characterised in that it contains irreversibly dehydrated K₂AlF₅, with the exception of a flux which consists of irreversibly dehydrated K₂AlF₅.

7. Flux according to Claim 6, characterised in that it contains 1 to 97% by weight of KAlF₄, 1 to 20% by weight of irreversibly dehydrated K₂AlF₅, 0 to 15% by weight of reversibly dehydrated K₂AlF₅, 0 to 15% by weight of K₂AlF₅·H₂O and 0 to 10% by weight of K₃AlF₆.

8. Flux according to Claim 7, characterised in that it consists of 86 to 97% by weight of KAlF₄, 3 to 14% by weight of irreversibly dehydrated K₂AlF₅, 0 to 8% by weight of reversibly dehydrated K₂AlF₅, 0 to 8% by weight of K₂AlF₅·H₂O and 0 to 4% by weight of K₃AlF₆ and 0 to 7% non-chemically bound water.

9. Flux according to any of Claims 6 to 8, characterised in that it additionally contains 10 to 500 parts by weight of a finely powdered solder metal, preferably silicon, per 100 parts by weight of the alkali metal salts of complex fluorides of aluminium.

10. Flux for brazing metallic materials, in particular light metal materials, based on alkali metal salts, preferably potassium salts, of complex fluorides of aluminium, characterised in that it contains irreversibly dehydrated K₂AlF₅ in the form of irregular crystals or consists thereof.

11. Process for the preparation of a flux according to any of Claims 6 to 10, characterised in that a flux which contains reversibly dehydrated K₂AlF₅ and/or K₂AlF₅·H₂O, or a precursor of such a flux, is subjected to a high-temperature treatment such that at least a part of the stated complex aluminium fluorides is converted into irreversibly dehydrated K₂AlF₅, and optionally a finely powdered solder metal, preferably silicon, is admixed.

12. Process for the preparation of a flux according to any of Claims 6 to 10, characterised in that irreversibly dehydrated K₂AlF₅ is mixed with other components of fluxes based on alkali metals of complex ammonium fluorides such as KAlF₄, K₂AlF₅·H₂O and/or reversibly dehydrated K₂AlF₅, or
that reversibly dehydrated K₂AlF₅ and/or K₂AlF₅·H₂O are mixed with other components of fluxes based on alkali metals of complex aluminium fluorides such as KAlF₄, and are subjected to a heat treatment so that the K₂AlF₅ or K₂AlF₅·H₂O is at least partially converted into irreversibly dehydrated K₂AlF₅, or
that the flux is prepared by precipitating an intermediate based on alkali metal salts of complex fluorides of aluminium from an aqueous solution which contains alkali metal ions, preferably potassium ions, aluminium ions and fluoride ions, and subjecting the optionally predried intermediate to a heat treatment so that K₂AlF₅·H₂O or reversibly dehydrated K₂AlF₅ present is at least partially converted into irreversibly dehydrated K₂AlF₅,
and optionally a finely powdered solder metal, preferably silicon, is admixed.

13. Process according to Claim 12, characterised in that the intermediate is dewatered in a centrifuge or in a filter chamber press.

14. Process according to any of Claims 11 to 13, characterised in that the heat treatment is carried out at a temperature above 228°C, preferably above 265°C.

## Revendications

1. Procédé de brasage de matériaux métalliques, en particulier de matériaux métalliques légers, avec utilisation d'un flux ou fondant à base de sels de métaux alcalins, de préférence de sels de potassium, de fluorures complexes d'aluminium, caractérisé en ce qu'on utilise un fondant qui contient K₂AlF₅ irréversiblement déshydraté.

2. Procédé selon la revendication 1, caractérisé en ce qu'on utilise un fondant qui contient KAlF₄ et K₂AlF₅ irréversiblement déshydraté.

3. Procédé selon la revendication 1 ou 2, caractérisé en ce que le fondant contient de 1 à 97 % en poids de KAlF₄ et de 1 à 20 % en poids de K₂AlF₅ irréversiblement déshydraté, de préférence de 86 à 97 % en poids de KAlF₄ et de 3 à 14 % en poids de K₂AlF₅ irréversiblement déshydraté.

4. Procédé selon la revendication 1, caractérisé en ce qu'on utilise un fondant qui, pour 100 parties en poids des sels de métaux alcalins de fluorures complexes de l'aluminium, contient en outre de 10 à 500 parties en poids d'un métal de brasage pulvérulent fin, de préférence de silicium.

5. Suspension aqueuse de fondant pour application dans le procédé selon l'une des revendications 1 à 4, caractérisée en ce qu'elle comprend un fondant qui contient K₂AlF₅ irréversiblement déshydraté.

6. Fondant pour le brasage des matériaux métalliques, en particulier des matériaux métalliques légers, à base de sels alcalins, de préférence de sels de potassium, de fluorures complexes de l'aluminium, caractérisé en ce qu'il contient K₂AlF₅ irréversiblement déshydraté, à l'exception d'un fondant qui se compose de K₂AlF₅ irréversiblement déshydraté.

7. Fondant selon la revendication 6, caractérisé en ce qu'il contient de 1 à 97 % en poids de KAlF₄, de 1 à 20 % en poids de K₂AlF₅ irréversiblement déshydraté, de 0 à 15 % en poids de K₂AlF₅ réversiblement déshydraté, de 0 à 15 % en poids de K₂AlF₅.H₂O et de 0 à 10 % en poids de K₃AlF₆.

8. Fondant selon la revendication 7, caractérisé en ce qu'il se compose de 86 à 97 % en poids de KAlF₄, de 3 à 14 % en poids de K₂AlF₅ irréversiblement déshydraté, de 0 à 8 % en poids de K₂AlF₅ réversiblement déshydraté, de 0 à 8 % en poids de K₂AlF₅.H₂O et de 0 à 4 % en poids de K₃AlF₆ et de 0 à 7 % en poids d'eau non chimiquement liée.

9. Fondant selon l'une des revendications 6 à 8, caractérisé en ce qu'il contient en outre, mélangées, pour 100 parties en poids des sels de métaux alcalins de fluorures complexes de l'aluminium, de 10 à 500 parties en poids d'un métal de brasage pulvérulent fin, de préférence de silicium.

10. Fondant pour le brasage des matériaux métalliques, en particulier des matériaux métalliques légers à base de sels de métaux alcalins, de préférence de sels de potassium, de fluorures complexes de l'aluminium, caractérisé en ce qu'il contient K₂AlF₅ irréversiblement déshydraté sous forme de cristaux irréguliers, ou se compose de ce corps.

11. Procédé de production d'un fondant selon l'une des revendications 6 à 10, caractérisé en ce qu'on soumet un fondant qui contient K₂AlF₅ réversiblement déshydraté et/ou K₂AlF₅.H₂O, ou un précurseur d'un tel fondant, à un traitement à haute température, de manière qu'au moins une partie des fluorures d'aluminium complexes mentionnés soit transformée en K₂AlF₅ irréversiblement déshydraté, et que le cas échéant on y mélange un métal de brasage pulvérulent fin, de préférence du silicium.

12. Procédé de production d'un fondant selon l'une des revendications 6 à 10, caractérisé en ce qu'on mélange K₂AlF₅ irréversiblement déshydraté avec d'autres constituants de fondants à base de métaux alcalins de fluorures d'aluminium complexes, comme KAlF₄, K₂AlF₅.H₂O et/ou K₂AlF₅ réversiblement déshydraté, ou en ce qu'on mélange K₂AlF₅ réversiblement déshydraté et/ou K₂AlF₅.H₂O avec d'autres composants de fondants à base de métaux alcalins de fluorures d'aluminium complexes comme KAlF₄ et qu'on les soumet à un traitement thermique de manière que le K₂AlF₅ ou selon les cas le K₂AlF₅.H₂O soit transformé au moins partiellement en K₂AlF₅ irréversiblement déshydraté, ou en ce qu'on produit le fondant par précipitation d'un précurseur à base de sels de métaux alcalins de fluorures complexes de l'aluminium à partir d'une solution aqueuse qui contient des ions de métaux alcalins, de préférence des ions potassium, des ions aluminium et des ions fluorures, et en ce qu'on soumet le précurseur éventuellement préséché à un traitement thermique de manière que le K₂AlF₅.H₂O ou selon les cas le K₂AlF₅ réversiblement déshydraté contenu soit transformé au moins partiellement en K₂AlF₅ irréversiblement déshydratré,
et en ce que le cas échéant on ajoute au mélange un métal de brasage pulvérulent fin, de préférence du silicium.

13. Procédé selon la revendication 12, caractérisé en ce qu'on déshydrate le précurseur dans une centrifugeuse ou une presse comportant une chambre à filtre.

14. Procédé selon l'une des revendications 11 à 13, caractérisé en ce qu'on effectue le traitement thermique à une température supérieure à 228°C, de préférence supérieure à 265°C.
